Europäisches Patentamt

European Patent Office

Office européen des brevets

(19)

(11) **EP 1 046 418 B1**

(12) **FASCICULE DE BREVET EUROPEEN**

(45) Date de publication et mention
de la délivrance du brevet:
**14.08.2002 Bulletin 2002/33**

(51) Int Cl.⁷: **B01D 53/047**, B01J 20/18,
C01B 39/14, C01B 39/22

(21) Numéro de dépôt: **00400389.3**

(22) Date de dépôt: **10.02.2000**

(54) **Procédé PSA mettant en oeuvre un adsorbant à résistance intrinsèque favorable à la cinétique d'adsorption**

Druckwechseladsorptionsverfahren unter Verwendung eines Adsorptionsmittels das einen inneren Widerstand aufweist, der günstig für die Kinetic der Adsorption ist

PSA process using an adsorbent which has an intrinsic resistance that is favourable to the adsorption kinetics

(84) Etats contractants désignés:
**AT BE CH CY DE DK ES FI FR GB GR IE IT LI LU MC NL PT SE**

(30) Priorité: **19.04.1999 FR 9904885**

(43) Date de publication de la demande:
**25.10.2000 Bulletin 2000/43**

(73) Titulaire: **L'air Liquide, S.A. à Directoire et Conseil de Surveillance pour l'Etude et l'Exploitation des Procédés Georges Claude**
**75321 Paris Cedex 07 (FR)**

(72) Inventeurs:
• **Labasque, Jacques**
**78000 Versailles (FR)**

• **Lledos, Bernard**
**78280 Guyancourt (FR)**

(74) Mandataire: **Pittis, Olivier et al**
**L'Air Liquide, S.A.,**
**Direction de la Propriété Intellectuelle,**
**75, Quai d'Orsay**
**75321 Paris Cedex 07 (FR)**

(56) Documents cités:
**EP-A- 0 685 430        EP-A- 0 769 320**
**EP-A- 0 785 020        US-A- 5 203 887**
**US-A- 5 698 013        US-A- 5 779 767**

**Description**

L'invention concerne un procédé de type PSA (Pressure Swing Adsorption), et plus particulièrement de type VSA, de séparation d'un flux gazeux, en particulier d'un flux gazeux, tel l'air, mettant en oeuvre un adsorbant ayant une résistance intrinsèque favorable à la cinétique d'adsorption

Il est connu que les gaz de l'air, notamment l'oxygène, présentent un grand intérêt industriel, de par leurs multiples applications dans des domaines techniques très variés.

Actuellement, la technique cyclique d'adsorption dite "PSA" est largement utilisée produire ces gaz.

Plus précisément, lorsque le mélange gazeux à séparer est de l'air et que le composant à récupérer est l'oxygène, ledit oxygène est séparé dudit mélange gazeux grâce à une adsorption préférentielle d'au moins l'azote sur un matériau adsorbant préférentiellement l'azote.

Cette adsorption de l'azote est effectuée par variation de la pression appliquée dans la zone de séparation contenant ledit matériau adsorbant.

L'oxygène ne s'adsorbant pas ou peu est récupéré en sortie de ladite zone de séparation, à une pureté, en général, supérieure à 90 %, voire à 93% ou plus.

Plus généralement, un procédé PSA pour la séparation d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de repressurisation de la zone de séparation comprenant l'adsorbant, par passage progressif de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille et la forme des particules d'adsorbant, la composition de ces particules et le champ de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale des procédés de type PSA.

Actuellement, les zéolites, notamment de type A, X, Y ou LSX (Low Silica X), sont les adsorbants les plus communément mis en oeuvre dans les procédés PSA.

Les particules zéolitiques contiennent habituellement des cations mono, di et/ou trivalents, par exemples des cations de métaux alcalins, alcalino-terreux ou de lanthanides, incorporés lors de la synthèse des particules de zéolite et/ou insérés subséquemment par une technique d'échange d'ions tel que décrit dans l'art antérieur.

Classiquement, les adsorbants les plus utilisés pour la séparation des gaz, en particulier de l'air, sont des zéolites fortement échangées, en général à plus de 80%, avec cations de métaux, tels des cations lithium, le calcium, le strontium, le baryum, l'aluminium, le zinc ou le cuivre. A ce titre, on peut citer, par exemples, les documents US-A-5,268,023, US-A-5,174,979, US-A-4,859,217, US-A-5,152,813, US-A-4,481,018, US-A-5,419,891, EP-A-589406 et EP-A-598391.

Cependant, la productivité d'une unité PSA dépend aussi d'autres paramètres, tel notamment le temps de cycle.

En effet, pour augmenter la productivité d'une unité PSA à un ou plusieurs adsorbeurs, c'est-à-dire pour produire davantage de gaz, par exemple d'oxygène, pendant une période de temps donnée, il convient de diminuer le temps de cycle de chacun des adsorbeurs de l'unité.

Pour ce faire, il est nécessaire d'utiliser un adsorbant possédant une cinétique d'adsorption suffisamment rapide, ainsi que décrit par le document EP-A-785020. Ainsi, il est connu que pour améliorer la cinétique des particules d'adsorbant, il est souhaitable de réduire leur diamètre hydraulique, ce qui engendre, par ailleurs, une augmentation des pertes de charges au sein des lits d'adsorbants.

Or, la diminution du diamètre hydraulique des particules entraîne également une diminution de leur résistance mécanique.

De là, les particules d'adsorbant étant plus fragiles, celles-ci vont s'écraser plus facilement.

En outre, si la résistance des particules d'adsorbant est trop élevée, il peut se produidre une détérioration de la cinétique du tamis moléculaire.

Le but de la présente invention est donc de résoudre le problème précité en proposant un procédé PSA mettant en oeuvre des particules d'adsorbant dont le diamètre hydraulique permette une cinétique d'adsorption élevée et dont la résistance intrinsèque permette, compte-tenu de ce diamètre, une résistance mécanique suffisante.

Le but de la présente invention est donc de proposer un procédé PSA mettant en oeuvre un adsorbant à cinétique rapide et à résistance intrinsèque suffisante pour être acceptable du point de vue industriel, notamment lors de la séparation non-cryogénique des gaz de l'air.

La présente invention concerne alors un procédé PSA, de préférence VSA, de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé, dans lequel ledit adsorbant comprend uniquement des particules d'une zéolite ayant un rapport Si/Al inférieur ou égal 5 choisie parmi les zéolites de type faujasite à structure FAU, notamment les zéolites X ou Y, ou à structure LTA, telles les zéolites A, ladite zéolite présentant un coefficient cinétique ($a_k$) et une résistance intrinsèque ($\alpha$), avec : $a_k > 0.5$ $s^{-1}$ et $0.10 < \alpha < 2$.

Le paramètre $a_k$ désignant la cinétique d'adsorption est défini notamment dans le document US-A-5,672,195 (EP-A-785020).

Selon le cas, le procédé de l'invention peut comprendre l'une ou plusieurs des caractéristiques supplémentaires suivantes:

- la résistance intrinsèque ($\alpha$) est supérieure à 0.15, de préférence supérieure à 0.20.
- la résistance intrinsèque ($\alpha$) est inférieure à 1.5, de préférence inférieure à 1.
- la zéolite est une zéolite à structure faujasite avec un rapport Si/Al de 1 à 1.25, de préférence une zéolite LSX avec Si/Al de l'ordre de $1.02 \pm 0.02$.
- la zéolite est échangée par des cations mono-, di- et/ou trivalents, de préférence des cations lithium, potassium, calcium, zinc, cuivre, aluminium, strontium ou nickel
- la zéolite contient de 30 à 99% de cations lithium et/ou calcium.
- la zéolite contient de 80 à 99% de cations lithium et/ou de 0.1 à 10% de cations potassium, de préférence de 90 à 99% de cations lithium.
- le flux gazeux à séparer comprend de l'oxygène et de l'azote, de préférence le flux gazeux est de l'air; l'air étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité, notamment séché,
- le premier composé est l'azote et le deuxième composé est l'oxygène; et on produit un flux gazeux riche en oxygène, c'est-à-dire comprenant, en général, au moins 90% d'oxygène.
- le flux gazeux à séparer comprend au moins l'un des composés choisis parmi le CO, le $CO_2$, l'hydrogène et leurs mélanges, et/ou au moins un autre gaz plus polaire que l'hydrogène.
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa,
- la température d'alimentation est comprise entre 10°C et 80°C, de préférence entre 25°C et 60°C.

Le procédé de l'invention peut être mis en oeuvre dans tout dispositif PSA classique, comprenant au moins un adsorbeur et, préférentiellement, de 1 à 3 adsorbeurs.

L'invention va maintenant être mieux comprise grâce à la description détaillée suivante et en références aux figures annexées.

La cinétique d'adsorption d'un tamis moléculaire peut être représentée par le paramètre $a_k$, ainsi que décrit dans le document US-A-5,672,195 ou par le document *Pressure Swing Adsorption, Ruthven, VCH, 1994, p.181*.

De manière générale, lorsque le phénomène limitant est la diffusion des molécules gazeuses dans les macropores du tamis moléculaire, on a :

$$a_k = k / d^2 \qquad (1)$$

où :

- $a_k$ est le coefficient cinétique exprimé en $s^{-1}$,
- k est la cinétique intrinsèque du matériau adsorbant exprimée en $m^2 . s^{-1}$,

- d est le diamètre hydraulique des particules exprimé en m.

En fait, la détermination pratique du paramètre $a_k$ est basée sur une analyse de la réponse dynamique du tamis moléculaire, c'est-à-dire de l'adsorbant testé.

Cette réponse dynamique est dérivée de la courbe de percée d'un mélange gazeux $O_2/N_2$ au travers une colonne initialement remplie d'oxygène. Le flux gazeux d'alimentation est à débit et à pression constants et un gaz traceur est mis en oeuvre pour pouvoir suivre ladite percée.

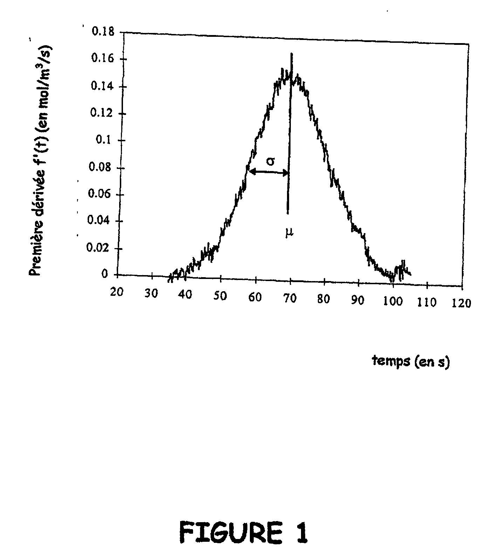

Un exemple de réponse dynamique obtenue est schématisée sur la figure 1, laquelle représente, en ordonnée, la dérivée première de la concentration en oxygène (en $mol/m^3/s$) et, en abscisse, le temps (en secondes).

Lorsque la capacité d'adsorption de la zéolite croît de façon linéaire en fonction de la pression à laquelle est soumise la zone d'adsorption, et donc l'adsorbant, on peut montrer que le paramètre $a_k$ satisfait l'équation suivante :

$$a_k = 2.\frac{\mu}{\sigma^2} \qquad (2)$$

où $\mu$ représente le temps moyen de sortie du front d'adsorption et $\sigma$ représente la largeur temporelle du front d'adsorption.

Pour obtenir une courbe de percée, il convient de se placer dans des conditions particulières de température, de pression et de concentration en azote afin que l'équation (2) soit vérifiée, et ceci en vue d'une évaluation simple du paramètre $a_k$ : plus précisément, on choisit un mélange de départ d'azote et d'oxygène comprenant moins de 10% en volume d'azote. On fixe, en outre, la pression au sein de ladite zone d'adsorption à une valeur inférieure à $2.10^5$ Pa (2 bar) tout en vérifiant que celle-ci appartient au domaine de linéarité de la courbe représentant de variation de la capacité d'adsorption en fonction de la pression. Ces conditions sont facilement déterminées par le spécialiste.

Le protocole opératoire suivi pour le tracé de la courbe de percée est, par exemple, le suivant.

A l'une des extrémités de la zone d'adsorption initialement en équilibre avec de l'oxygène pur, on injecte (à débit constant) un mélange d'azote et d'oxygène. Dans un premier temps, la totalité de l'azote contenu dans le mélange se trouve adsorbé sur l'adsorbant, de l'oxygène pur étant récupéré en sortie de la zone d'adsorption. Dans la zone d'adsorption, l'adsorbant situé en entrée de zone capte le premier les molécules d'azote du mélange $O_2/N_2$. Pendant ce même temps, l'adsorbant à proximité de la sortie de la zone d'adsorption, étant exclusivement au contact d'un flux d'oxygène, reste intact. La zone où s'effectue des transferts de molécules entre l'adsorbant et la phase gazeuse est couramment appelée front d'adsorption. Celui-ci avance progressivement le long de la zone d'adsorption par adsorption des molécules d'azote du mélange à séparer.

On comprend qu'une fois le front d'adsorption arrivé en fin de la zone d'adsorption, le gaz récupéré en sortie de ladite zone contienne de l'azote en plus de l'oxygène attendu, dans la mesure où la totalité du lit d'adsorbant contenu dans ladite zone d'adsorption se trouve saturée.

En raison de l'existence de mécanismes de diffusion moléculaire et de l'hétérogénéité des agglomérats de zéolite, la saturation de l'adsorbant ne se produit pas de façon uniforme dans la direction de l'avancée du mélange gazeux au sein de la zone d'adsorption. Ainsi, lorsque celui-ci atteint la fin de la zone d'adsorption, la concentration de l'azote dans le mélange récupéré en sortie croît progressivement.

La courbe de percée représente la variation de la concentration en oxygène en sortie de la zone d'adsorption en fonction du temps; le temps zéro correspondant à l'instant précis où la phase d'adsorption est initiée. Cette courbe est définie par l'équation $c = f(t)$ ; où c représente la concentration en oxygène dans le mélange gazeux récupéré en sortie, t est la variable temps et f est la fonction figurant les variations de la concentration c en fonction du temps t.

Pour la détermination du paramètre $a_k$, il convient d'enregistrer la courbe de percée. Ceci est réalisé de façon connue en soi par simple mesure de la concentration en oxygène dans le mélange gazeux récupéré en sortie de la zone d'adsorption à différents instants.

Le temps moyen $\mu$ de sortie du front est calculé à partir de la courbe de percée $f(t)$ selon l'équation (3) suivante :

$$\mu = \frac{\displaystyle\int_0^\infty t.f'(t).dt}{\displaystyle\int_0^\infty f'(t).dt} \qquad (3)$$

où f(t) représente la dérivée de la fonction f(t) définie ci-dessus ; un exemple de la dérivée f'(t) étant schématisée sur la figure 1.

De même, la largeur temporelle du front répond à l'équation (4) suivante :

$$\sigma^2 = \frac{\displaystyle\int_0^\infty (t-\mu)^2.f'(t).dt}{\displaystyle\int_0^\infty f'(t).dt} \qquad (4)$$

où f'(t) correspond également à la dérivée de la fonction f(t).

Le paramètre $a_k$ est alors défini par l'équation (2) donnée précédemment et il est ainsi facilement déterminé à partir des valeurs de $\mu$ et $\sigma$ ainsi calculées.

En pratique, on utilise une colonne de 127 cm de longueur et 4.5 cm de diamètre, le débit du mélange gazeux d'alimentation (98% $O_2 \pm 2\%$ $N_2$) est de 2.36 $m^3$/h, la pression absolue est de 1,5.10$^5$ Pa, la température de 20°C et un analyseur ayant un temps de réponse de moins de 0.5 sec.

Il apparaît alors, au vu de l'équation (1) ci-avant, que pour améliorer la cinétique du tamis moléculaire, on peut soit augmenter le coefficient k, lequel dépend des propriétés du réseau poreux et de l'isotherme d'adsorption du gaz considéré, tel l'azote, soit diminuer le diamètre d.

Or, comme expliqué ci-avant, une diminution du diamètre d des particules d'adsorbant engendre une diminution de la résistance mécanique desdites particules d'adsorbant.

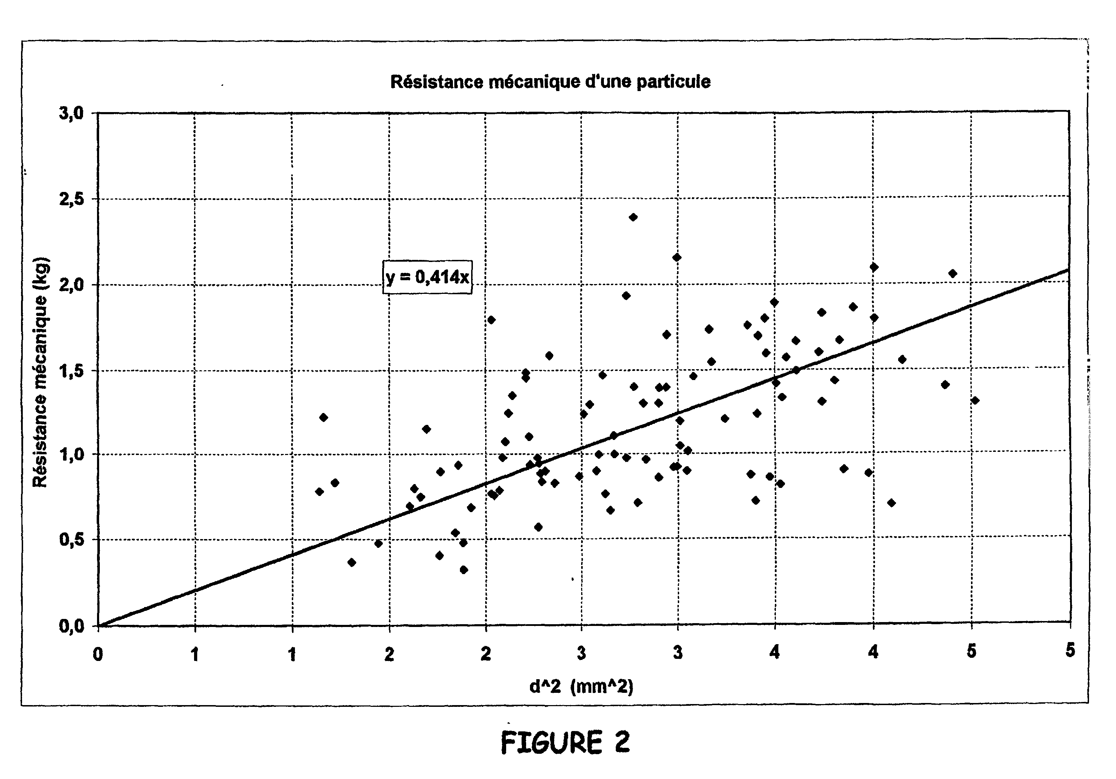

Ceci apparaît d'ailleurs nettement sur la figure 2 qui représente la résistance mécanique (en kg) des particules d'un adsorbant, en ordonnées, en fonction du diamètre (d) au carré (en $mm^2$) desdites particules.

Pour ce faire, les mesures de résistance à l'écrasement des particules ou billes d'adsorbants ont été réalisées selon la procédure de mesure détaillée ci-après.

La résistance mécanique des particules ou billes d'adsorbant est mesurée à l'aide d'un dynamomètre du type ADAMEL-LHOMARGY MTS 2/M, utilisant un capteur de force de 100 Newtons pleine échelle. La précision de ce capteur est de $\pm$ 0.5%, entre 2 et 100% de la pleine échelle. Le test est réalisé sur 25 billes prélevées au hasard sur l'ensemble ou l'échantillon de billes à analyser. Pour ce faire, environ 1 gramme de billes est déposé dans une feuille de papier pliée en 2, c'est-à-dire en forme de "V", de façon à ce que les billes s'alignent automatiquement dans la rigole ainsi formée. Les 25 premières billes non cassées sont sélectionnées. Elles sont stockées dans un récipient fermé afin que leurs propriétés mécaniques ne soient pas affectées par l'humidité ambiante. Ensuite, ces 25 billes sont, une par une, posées au centre du plateau du dynamomètre et soumises à une force croissante jusqu'à ce qu'elles cassent. Les paramètres ajustés sur le dynamomètre sont la vitesse de pré-charge (ici 30 mm.min$^{-1}$ $\pm$ 0.1%), la limite de pré-charge (ici 0.02 N ) et la vitesse de test (ici 10 mm.min$^{-1}$ $\pm$ 0.1%). En outre, la force maximale (en N) supportée par la bille avant rupture est directement fournie par le dynamomètre. Cette force sera considérée comme la résistance mécanique de la bille. Pour un échantillon donné, la résistance à l'écrasement sera considérée comme la moyenne obtenue sur les 25 billes prélevées au hasard tel que décrit ci dessus. Cette valeur sera donnée en kilogrammes (daN).

Des mesures ont été ainsi effectuées et montrent clairement que plus le diamètre des particules diminue, plus leur résistance mécanique baisse.

A partir de ces mesures, il a été possible de déterminer la relation (5) représentée sur la figure 2 ci-annexée, reliant résistance mécanique (RM), résistance intrinsèque ($\alpha$) et diamètre (d) des particules, à savoir la relation :

$$RM = \alpha \cdot d^2 \tag{5}$$

où:

- RM est exprimée en kg,
- $\alpha$ est exprimée en kg/mm$^2$ avec ici $\alpha = 0.414$, et
- d est exprimé en m.

Il s'ensuit qu'étant donné que toute réduction de la granulométrie a un impact négatif sur la résistance mécanique, pour pouvoir réduire la granulométrie des particules sans trop affaiblir leur résistance mécanique, il convient que la résistance intrinsèque a des particules d'adsorbant ait une valeur suffisante, au moins 0.1, de préférence d'au moins 0.2 kg/mm$^2$.

Par ailleurs, comme le montrent les exemples A à E consignés dans le tableau ci-après, il existe un lien entre le paramètre de résistance intrinsèque $\alpha$ et le paramètre k de cinétique intrinsèque.

Tableau

| Exemple n° | Granulométrie | Ecrasement | | Cinétique | |
|---|---|---|---|---|---|
| | Diamètre (d) (mm) | RM (kg) | $\alpha = RM/d^2$ (kg/mm$^2$) | $a_k$ (1/s) | $k=a_k \cdot d^2$ (mm$^2$/s) |
| A | 1.48 | 0.08 | 0.03 | >4 | >4 |
| B | 2.50 | 0.19 | 0.03 | 1.99 | 12.4 |
| C | 2.54 | 0.29 | 0.05 | 1.34 | 8.6 |
| D | 1.42 | 1.15 | 0.57 | 0.88 | 1.8 |
| E | 1.81 | 1.92 | 0.58 | 0.53 | 1.7 |

On constate qu'à un paramètre de résistance intrinsèque $\alpha$ plus élevé, correspond à un paramètre k de cinétique intrinsèque plus faible.

En d'autres termes, augmenter la résistance intrinsèque des particules conduit à une diminution de leur cinétique intrinsèque.

De là, il est souhaitable, pour obtenir des performances acceptables sur le plan industriel, que la résistance intrinsèque $\alpha$ des particules d'adsorbant ne soit pas trop élevée, par exemple inférieure à 2, de préférence inférieure à 1 kg/mm$^2$.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la purification de gaz de synthèse ou "syngaz".

## Revendications

**1.** Procédé PSA de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé, dans lequel ledit adsorbant comprend uniquement des particules d'une zéolite ayant un rapport Si/Al inférieur ou égal 5 choisie parmi les zéolites de type X, Y ou A, ladite zéolite présentant un coefficient cinétique ($a_k$) et une résistance intrinsèque ($\alpha$), avec :

$$a_k > 0.5 \text{ s}^{-1} \qquad \text{et} \qquad 0.10 \text{ kg/mm}^2 < \alpha < 2 \text{ kg/mm}^2$$

le coefficient cinétique ($a_k$) étant déterminé pour un mélange gazeux formé de 98% de $O_2$ et de 2% de $N_2$, à un débit d'alimentation de 2.36 $m^3$/h, à une pression absolue de $1,5.10^5$ Pa et une température de 20°C, et la résistance intrinsèque ($\alpha$) étant déterminée en soumettant au moins 25 particules d'adsorbant prélevées au hasard à un écrasement pour déterminer la force maximale de résistance mécanique (RM) supportée par chaque particule avant rupture et en mesurant leur diamètre (d) exprimé en mm, la résistance mécanique (RM) exprimée en kg, la résistance intrinsèque ($\alpha$) et le diamètre (d) des particules étant tels que : RM = $\alpha$ x $d^2$.

**2.** Procédé selon la revendication 1, **caractérisé en ce que** la résistance intrinsèque ($\alpha$) est supérieure à 0.15 kg/$mm^2$, de préférence supérieure à 0.20 kg/$mm^2$.

**3.** Procédé selon l'une des revendications 1 ou 2, **caractérisé en ce que** la résistance intrinsèque ($\alpha$) est inférieure à 1.5 kg/$mm^2$, de préférence inférieure à 1 kg/$mm^2$.

**4.** Procédé selon l'une des revendications 1 à 3, **caractérisé** en ce la zéolite est une zéolite à structure faujasite avec un rapport Si/Al de 1 à 1.25, de préférence une zéolite LSX avec Si/Al de l'ordre de $1.02 \pm 0.02$.

**5.** Procédé selon l'une des revendications 1 à 4, **caractérisé en ce que** la zéolite est échangée par des cations mono-, di- et/ou trivalents, de préférence des cations lithium, potassium, calcium, zinc, cuivre, aluminium, strontium ou nickel

**6.** Procédé selon l'une des revendications 1 à 5, **caractérisé en ce que** la zéolite contient de 50 à 99% de cations lithium et/ou calcium.

**7.** Procédé selon l'une des revendications 1 à 6, **caractérisé en ce que** le flux gazeux à séparer comprend de l'oxygène et de l'azote, de préférence le flux gazeux est de l'air, le premier composé est l'azote et le deuxième composé est l'oxygène.

**8.** Procédé selon l'une des revendications 1 à 7, **caractérisé en ce que** le flux gazeux à séparer comprend au moins un premier composé gazeux choisi parmi le CO, le $CO_2$, l'hydrogène et leurs mélanges, et/ou au moins un deuxième composé gazeux plus polaire que l'hydrogène.

**9.** Procédé selon l'une des revendications 1 à 7, **caractérisé en ce qu'**il est de type VSA.

**Patentansprüche**

**1.** Druckwechseladsorptionsverfahren zur Trennung eines Gasstroms, der mindestens eine erste Verbindung, die an mindestens einem Adsorptionsmittel bevorzugt adsorbiert wird, und mindestens eine zweite Verbindung, die an dem mindestens einen Adsorptionsmittel weniger bevorzugt adsorbiert wird als die erste Verbindung, enthält, bei dem das Adsorptionsmittel einzig und allein Teilchen aus einem unter Zeolithen X, Y oder A ausgewählten Zeolith mit einem Si/Al-Verhältnis kleiner gleich 5 und einem kinetischen Koeffizienten ($a_k$) und einer intrinsischen Festigkeit ($\alpha$) mit:

$$a_k > 0,5 \text{ s}^{-1} \qquad \text{und} \qquad 0,10 \text{ kg/mm}^2 < \alpha < 2 \text{ kg/mm}^2,$$

wobei der kinetische Koeffizient ($a_k$) für ein Gasgemisch aus 98% $O_2$ und 2% $N_2$ bei einer Einsatzströmungsrate von 2,36 $m^3$/h, einem Absolutdruck von $1,5 \cdot 10^5$ Pa und einer Temperatur von 20°C bestimmt wird und die intrinsische Festigkeit ($\alpha$) bestimmt wird, indem man mindestens 25 nach dem Zufallsprinzip ausgewählte Adsorptionsmittelteilchen zur Bestimmung der von jedem Teilchen vor dem Zerbrechen ausgehaltenen Höchstkraft in bezug auf mechanische Festigkeit (MF) zusammendrückt und ihren Durchmesser (d) in mm mißt und die mechanische Festigkeit (MF) in kg ausdrückt, wobei die intrinsische Festigkeit ($\alpha$) und der Durchmesser (d) der Teilchen solche Werte annehmen, daß: MF = $\alpha$ x $d^2$, enthält.

**2.** Verfahren nach Anspruch 1, **dadurch gekennzeichnet, daß** die intrinsische Festigkeit ($\alpha$) mehr als 0,15 kg/mm$^2$, vorzugsweise mehr als 0,20 kg/mm$^2$, beträgt.

**3.** Verfahren nach Anspruch 1 oder 2, **dadurch gekennzeichnet, daß** die intrinsische Festigkeit ($\alpha$) weniger als 1,5 kg/mm$^2$, vorzugsweise weniger als 1 kg/mm$^2$, beträgt.

**4.** Verfahren nach einem der Ansprüche 1 bis 3, **dadurch gekennzeichnet, daß** es sich bei dem Zeolith um einen Zeolith mit Faujasitstruktur und einem Si/Al-Verhältnis von 1 bis 1,25, vorzugsweise einen Zeolith LSX mit einem Si/Al-Verhältnis von etwa 1,02 ± 0,02, handelt.

**5.** Verfahren nach einem der Ansprüche 1 bis 4, **dadurch gekennzeichnet, daß** der Zeolith durch ein-, zwei- und/ oder dreiwertige Kationen, vorzugsweise Lithium-, Kalium-, Calcium-, Zink-, Kupfer-, Aluminium-, Strontium- oder Nickelionen, ausgetauscht ist.

**6.** Verfahren nach einem der Ansprüche 1 bis 5, **dadurch gekennzeichnet, daß** der Zeolith 50 bis 99% Lithium- und/oder Calciumionen enthält.

**7.** Verfahren nach einem der Ansprüche 1 bis 6, **dadurch gekennzeichnet, daß** der zu trennende Gasstrom Sauerstoff und Stickstoff enthält und es sich bei dem Gasstrom vorzugsweise um Luft handelt, wobei es sich bei der ersten Verbindung um Stickstoff und bei der zweiten Verbindung um Sauerstoff handelt.

**8.** Verfahren nach einem der Ansprüche 1 bis 7, **dadurch gekennzeichnet, daß** der zu trennende Gasstrom mindestens eine erste gasförmige Verbindung, die unter CO, $CO_2$, Wasserstoff und Gemischen davon ausgewählt ist, und/oder mindestens eine zweite gasförmige Verbindung mit größerer Polarität als Wasserstoff enthält.

**9.** Verfahren nach einem der Ansprüche 1 bis 7, **dadurch gekennzeichnet, daß** es sich um ein Vakuumwechseladsorptionsverfahren handelt.

## Claims

**1.** PSA process for separating a stream of gas containing at least one first compound which is preferentially adsorbed on at least one adsorbent and at least one second compound which is adsorbed less preferentially on at least the said adsorbent than the said first compound, in which process the said adsorbent only comprises particles of a zeolite having an Si/Al ratio of less than or equal to 5 and chosen from zeolites of X, Y or A type, the said zeolite having a kinetic coefficient ($a_k$) and an intrinsic strength ($\alpha$), with:

$$a_k > 0.5 \text{ s}^{-1} \qquad \text{and} \qquad 0.10 < \alpha < 2$$

the kinetic coefficient ($a_k$) being determined for a gas mixture formed from 98% $O_2$ and 2% $N_2$, with a feed rate of 2.36 m$^3$/h, at an absolute pressure of $1.5 \times 10^5$ Pa and a temperature of 20°C, and the intrinsic strength ($\alpha$) being determined by compressing at least 25 adsorbent particles, taken at random, in order determine the mechanical strength (MS), that is the maximum force that each particle can withstand before fracturing, and by measuring their diameter (d) expressed in mm, the mechanical strength (MS) expressed in kg, the intrinsic strength ($\alpha$) and the diameter (d) of the particles being such that:

$$MS = \alpha \times d^2.$$

**2.** Process according to Claim 1, **characterized in that** the intrinsic strength ($\alpha$) is greater than 0.15 kg/mm$^2$, preferably greater than 0.20 kg/mm$^2$.

**3.** Process according to either of Claims 1 and 2, **characterized in that** the intrinsic strength ($\alpha$) is less than 1.5 kg/mm$^2$, preferably less than 1 kg/mm$^2$.

**4.** Process according to one of Claims 1 to 3, **characterized in that** the zeolite is a zeolite having a faujasite structure with an Si/Al ratio of 1 to 1.25, preferably an LSX-type zeolite with an Si/Al of about 1.02 ± 0.02.

5. Process according to one of Claims 1 to 4, **characterized in that** the zeolite is exchanged by monovalent, divalent and/or trivalent cations, preferably lithium, potassium, calcium, zinc, copper, aluminium, strontium or nickel cations.

6. Process according to one of Claims 1 to 5, **characterized in that** the zeolite contains from 50 to 99% lithium and/or calcium cations.

7. Process according to one of Claims 1 to 6, **characterized in that** the stream of gas to be separated comprises oxygen and nitrogen and preferably the stream of gas is a stream of air, the first compound is nitrogen and the second compound is oxygen.

8. Process according to one of Claims 1 to 7, **characterized in that** the stream of gas to be separated comprises at least one first gaseous compound chosen from CO, $CO_2$, hydrogen and mixtures thereof, and/or at least one second gaseous compound more polar than hydrogen.

9. Process according to one of Claims 1 to 7, **characterized in that** it is of the VSA type.

FIGURE 1

**Résistance mécanique d'une particule**

$y = 0,414x$

Y-axis: Résistance mécanique (kg)

X-axis: d^2 (mm^2)

**FIGURE 2**